# EUROPEAN PATENT SPECIFICATION

(11) **EP 1 897 786 B1**
(45) Date of publication and mention of the grant of the patent: **05.01.2011**
(21) Application number: 06120099.4
(22) Date of filing: 05.09.2006
(51) Int. Cl.: B62D 25/06

(54) **ROOF JOINT**
Verbindungsstruktur eines Dachs
Joint pour un toit

(43) Date of publication of application: 12.03.2008
(73) Proprietor: Ford Global Technologies, LLC, Dearborn, MI 48126 (US)
(72) Inventor: Lassl, Gunnar, 445 34 Bohus (SE); Palmquist, Niclas, 423 38 Torslanda (SE)
(74) Representative: VALEA AB

(56) References cited:
- EP-A- 1 232 936
- DE-A1- 19 523 005
- DE-A1- 19 915 278
- JP-A- 7 215 240
- JP-A- 2000 247 259
- US-A- 4 417 762
- US-A- 4 874 200
- US-A1- 2002 140 254
- US-A1- 2005 116 509

## Description

### TECHNICAL FIELD

The present invention relates to a vehicle body structure having a longitudinal centre, the vehicle body comprises a roof panel having a longitudinal centre line. The roof panel comprises a base portion extending from both sides of the longitudinal centre line; the roof panel further comprises a flanged portion. The vehicle body structure further comprises a body member comprising a first and a second abutment surface, wherein the abutment surfaces are mutually inclined, wherein the first abutment surface projects in a direction towards the longitudinal centre of the vehicle body structure. At least a portion of the base portion is in a substantially parallel overlapping contacting relationship to the first abutment surface.

The invention further relates to a method attaching a roof panel to a vehicle body.

### BACKGROUND OF THE INVENTION

In vehicles, particularly cars, of today, the roof of the vehicle is generally manufactured as a separate panel and attached to the vehicle body by means of conventional attachment methods including, but not limited to: welding, such a spot welding or laser welding, and brazing, e.g. laser brazing. Due to manufacturing tolerances of the vehicle body, and to some extent of the roof panel itself, the roof panel and the associated attachment structures of the vehicle body may be misaligned during the attachment procedure. Apart from a negative aesthetic appearance, the misalignment may cause a plurality of problems, such as corrosion problems, e.g. crevice corrosion. Prior art teaches that in order to reduce possible corrosion problems, as well as improving the appearance of the vehicle, a roof molding structure may be attached above the roof panel and vehicle body attachment area. However, this solution requires an additional component, being the roof molding structure, with its associated problems, such as its procurement and an additional mounting step.

In order to avoid the use of the roof molding structure, US 2005/0116509 teaches the use of a roof panel comprising a substantially Z-shaped edge. By applying a vertical pressure to the Z-shaped edge prior to, or simultaneously with, attaching the roof panel to the vehicle body, e.g. a roof side rail of the vehicle body, the roof panel may deflect downwards and hence outwards towards the vehicle body, thus reducing a possible misalignment between the roof panel and the vehicle body prior to fixing the roof panel to the vehicle body. However, this solution exhibits several disadvantages. For example, due to the Z-shaped edge of the roof panel, the pressure applied to the panel during an alignment procedure has to be thoroughly controlled in order not to damage the Z-shaped edge. Furthermore, the Z-shaped edge may be complicated to manufacture, and since the outward misalignment is corrected by vertically displacing an edge of the roof panel, the vertical alignment of the roof panel and vehicle body may be impaired. In other words, the outward alignment of the roof panel and the vehicle body may be obtained at the expense of the corresponding vertical alignment.

US 4 874 200 shows a root joint according to the preamble of claim 1.

### SUMMARY OF THE INVENTION

A first object of the invention is to provide a vehicle body structure comprising a roof panel, wherein the alignment of the roof panel and the roof supporting portion of the vehicle body structure can be thoroughly adjusted prior to, or during, the attachment of the roof panel to the vehicle body structure.

A second object of the invention is to provide a vehicle body structure wherein the roof panel is tolerably insensitive to a pressure applied to the panel during an alignment phase of a mounting of the roof panel.

A third object of the invention is to provide a vehicle body structure wherein the alignment of the roof panel and the roof supporting portion of the vehicle body structure can be thoroughly adjusted prior to, or during, the attachment of the roof panel to the vehicle body structure and the roof panel is simple to manufacture.

A fourth object of the invention is to provide a vehicle body structure wherein the outward alignment of roof panel and the vehicle body structure can be obtained during a mounting procedure without impairing the corresponding vertical alignment.

At least one of the aforementioned objects is achieved by a vehicle body structure as claimed in appended claim 1.

Thus, the invention relates to a vehicle body structure having a longitudinal centre, the vehicle body structure comprising a roof panel having a longitudinal centre line. The roof panel comprises a base portion extending from both sides of the longitudinal centre line; the roof panel further comprises a flanged portion, wherein a transition from the base portion to the flanged portion occurs in an intermediate portion. The vehicle body structure further comprises a body member comprising a first and a second abutment surface, wherein the abutment surfaces are mutually inclined, wherein the first abutment surface projects in a direction towards the longitudinal centre of the vehicle body structure. At least a portion of the base portion is in a substantially parallel overlapping contacting relationship to the first abutment surface. According to the invention, the flanged portion is in a substantially parallel overlapping contacting relationship to the second surface. The flanged portion comprises a distal edge portion and the roof panel is attached to the body member along at least a portion of the distal edge portion. The roof panel is attached to the body member by means of a joint along at least a portion of the distal edge portion and at least a portion of the second surface.

Using a vehicle body structure pursuant to the invention, a proper alignment of the roof panel and the roof supporting portion of the vehicle body structure can be obtained by simply pressing the roof panel outwards towards the second abutment surface of the body member prior to, or during, the attachment of the roof panel to the body member. As used herein, the expression "outwards" generally refers to a direction which is towards the second abutment surface and which direction is substantially coplanar with the first abutment surface of the base member. Furthermore, as used herein, the expression "vertical" refers to a direction which is generally perpendicular to the base portion of the roof panel when properly assembled with the vehicle body structure.

As further used herein, the expression "longitudinal centre line" of the roof panel refers to a line extending from the forward portion to the rear portion of the roof panel, which line is constituted by a set of subsequent points with increasing distance from the forward portion, wherein each point is located in the transversal centre, i.e. in the centre in the width direction, of the roof panel. The forward portion corresponds to the intended normal direction of travel of the vehicle to which the roof panel is intended to be fitted.

Additionally, as used herein, the expression "longitudinal centre" of the vehicle body refers to a vertically oriented plane extending from the forward portion to the rear portion of the vehicle body structure, which plane is constituted by a set of subsequent lines with increasing distance from the forward portion, wherein each line extends through the bottom and the top of the vehicle body structure and is located in the transversal centre, i.e. in the centre in the width direction, of the vehicle body structure.

The flanged portion of the roof panel can be of a simple structure which is tolerably insensitive to a pressure applied. Furthermore, the flanged portion of the roof panel may be easily obtained by simply bending an edge of the roof panel; thus there is no need for complex tools for manufacturing a roof panel comprising a flanged portion. In addition, since at least a portion of the base portion of the roof panel is in a substantially parallel overlapping contacting relationship to the first abutment surface, a vertical alignment of the roof panel and the body member can be assured simultaneously with the outward alignment by simply applying a vertical pressure to the roof panel. Thus, for a vehicle body structure pursuant to the present invention, a proper outward alignment of the roof panel and the body member need not exclude a proper vertical alignment of the aforementioned members, but may rather instead promote sufficient outward and vertical alignments.

By arranging the flange portion in a substantially parallel overlapping contacting relationship to the second surface, the alignment of the roof panel and the body member is further facilitated. This is since a pressure can be outwardly applied to the roof panel until the flanged abuts the second surface, at which position it is also ensured that the flange portion and the second surface are substantially parallel. As such, further increasing the pressure applied to the roof panel will not significantly change the position of the roof panel with respect to the body member, i.e. the alignment of the two members is substantially insensitive to the pressure applied to the roof panel, as long as the aforesaid pressure exceeds a minimum level. Hence, a predetermined alignment pressure can be used for all roof panels, which significantly simplifies the mounting procedure.

According to an embodiment of the invention, a relative body member inclination angle between the mutually inclined first and second abutment surfaces is in a range of 45-135 °, preferably in a range of 60 - 120 °, most preferably in a range of 80-100 °. By arranging the relative body member inclination angle in any of the aforementioned ranges, a suitable outward stop for the roof panel may be obtained, being the second abutment surface, while at the same time obtaining a support for the base portion of the roof panel by the first abutment member.

According to another embodiment of the invention, a relative roof inclination angle between the flanged portion and the base portion is substantially equal to the relative body inclination angle. This further enhances the alignment pressure insensitivity of the structure according to the invention.

By attaching the roof panel along at least a portion of the distal edge portion, several advantages are obtained. For example, a risk of obtaining crevice corrosion in the attachment area is reduced since there may not be a crevice directly exposed to the surrounding environment between the roof panel and body member when the roof panel has been aligned with, and attached to, the body member.

According to another embodiment of the invention, the roof panel is attached to the body member by means of a brazed joint. By utilizing a brazed joint, both the roof panel and the body member can retain their original physical properties after the brazing since less heat is required that for welding for example. A brazed joint also generally provide a good appearance without a need of time consuming finishing operations, which is important since the attachment area of the roof panel and the body member generally is in the field of vision of a person close to a vehicle comprising the vehicle body structure of the invention.

According to a further embodiment of the invention, a smallest distance from the joint to the portion of the base portion in contacting relationship to the first abutment surface is at least 2 mm, preferably at least 4 mm. By providing the flanged portion with any one of the aforementioned distances, a pressure tool, such as a pressure roll, can be easily fitted in order to apply at least an outward pressure to the flanged portion.

According to another embodiment of the invention, the base portion extends in a transversal direction being substantially parallel to the extension of the first abutment surface from the second abutment surface and the base portion overlaps the first abutment surface for a distance of at least 0.1 %, preferably at least 0.3 % of the transversal extension of the base portion. By arranging the base portion to overlap the first abutment surfaces for any of the aforementioned distances, a support for the roof panel is obtained on which the roof panel can rest during the mounting of the panel. This support is obtained even if there is a relatively large initial outward misalignment between the roof panel and the vehicle body. Furthermore, since the roof panel is vertically supported by the first abutment surface, the risk of obtaining a vertical misalignment between the roof panel and the base member is significantly reduced.

According to a further embodiment of the invention, the body member is a roof side rail. Although the vehicle body structure of the invention may include an attachment of the roof panel to the forward and rearward ends of a vehicle body, the invention is preferably used on the sides of a vehicle body structure.

According to another embodiment of the invention, the roof panel is constituted by a steel plate or an aluminium plate. A steel plate or an aluminium plate is easily manufactured and bent in order to obtain the flanged portion of the roof panel. Furthermore, a steel plate or an aluminium plate is suitable for a plurality of attachment operations, e.g. brazing.

Another embodiment of the invention relates to a vehicle comprising a vehicle body structure according to the present invention.

A fifth object of the invention is to provide a method of attaching a roof panel of a vehicle body structure to a body member wherein a proper alignment of the roof panel and the body member is ensured while still providing an efficient mounting procedure.

This fifth object is achieved by attachment method defined in the attached claim 12.

The method according to the invention relates to a method of attaching a roof panel of a vehicle body structure to a body member where the roof panel comprises a base portion and a flanged portion. The body member comprises first and second abutment surfaces which are mutually inclined. The method is used in order to ensure that at least a portion of the base portion is in a substantially parallel overlapping contacting relationship to the first abutment surface. According to the invention, the method comprises the steps of:
- applying a pressure to at least a portion of the roof panel in a first direction towards at least the second abutment surface,
- attaching the flanged portion to the body member along at least a portion of the second abutment surface, and
- applying a pressure to at least a portion of the roof panel in a second direction towards at least the first abutment surface.
wherein a transition from the base portion to the flanged portion occurs in an intermediate portion of the roof panel and the inventive method includes a step of applying the pressure to at least a portion of the intermediate portion. The flanged portion of the roof panel comprises a distal edge and the inventive method includes a step of attaching the roof panel to the body member along at least a portion of the distal edge.

As previously stated, by applying a pressure in the direction towards the second abutment surface, a proper outward alignment of the roof panel and the body member can be obtained. Since the pressure is applied in substantially the same direction as for which alignment is sought, a risk of obtaining an adequate outward alignment at the expense of e.g. a vertical alignment is significantly reduced.

By the method, the roof panel will be kept in place vertically during the alignment and attachment procedures and the risk of obtaining a vertical misalignment between the roof panel and the base member is significantly reduced.

By applying the pressure in the intermediate portion, pressures in the outward and vertical directions can be applied by the same tool and even the same body or surface of the tool which further facilitates the alignment and attachment procedures.

A further embodiment of the inventive method includes a step of applying the pressure by means of a pressure roll. A pressure roll is an efficient tool for applying a local pressure along a surface.

The benefits of attaching the roof panel along at least a portion of the distal edge have been previously disclosed.

A further embodiment of the inventive method includes a step of attaching the roof panel to the body member by means of brazing, preferably laser brazing. The benefits of brazing the roof panel to the body member have been discussed previously.

### BRIEF DESCRIPTION OF THE DRAWINGS

The present invention will hereinafter be further explained by means of non-limiting examples with reference to the appended figures wherein:
- Fig. 1: is a cross-sectional view of a portion of a vehicle body structure according to an embodiment of the present invention;
- Fig. 2: is a cross-sectional view of the embodiment illustrated in Fig. 1, prior to a final assembly, with additional reference numerals;

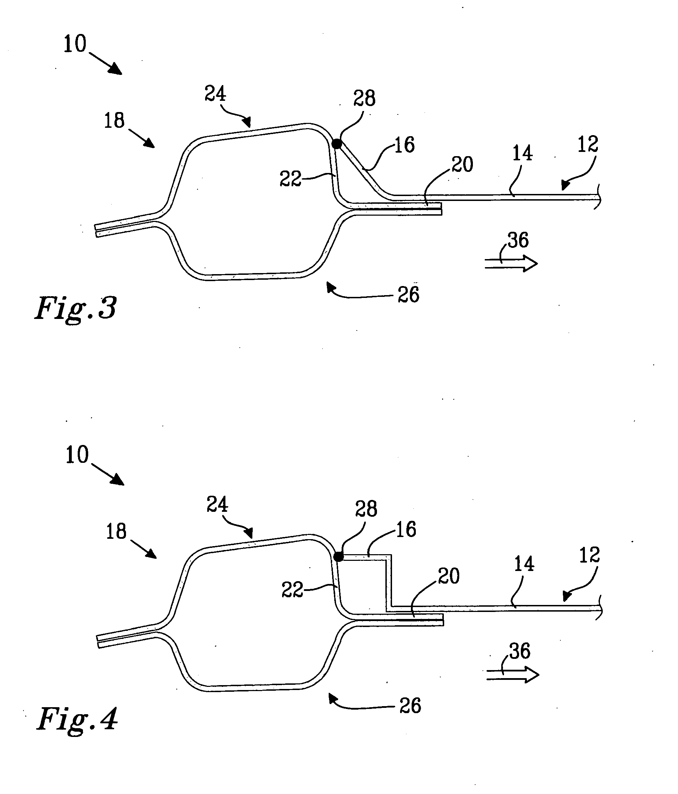

- Fig. 3: is a cross-sectional view of an exemplary vehicle body structure;
- Fig. 4: is a cross-sectional view of another exemplary vehicle body structure;
- Fig. 5: is a cross-sectional view of still a further embodiment of the present invention, and
- Fig. 6: is a schematic illustration of an alignment and attachment method according to the present invention.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims.

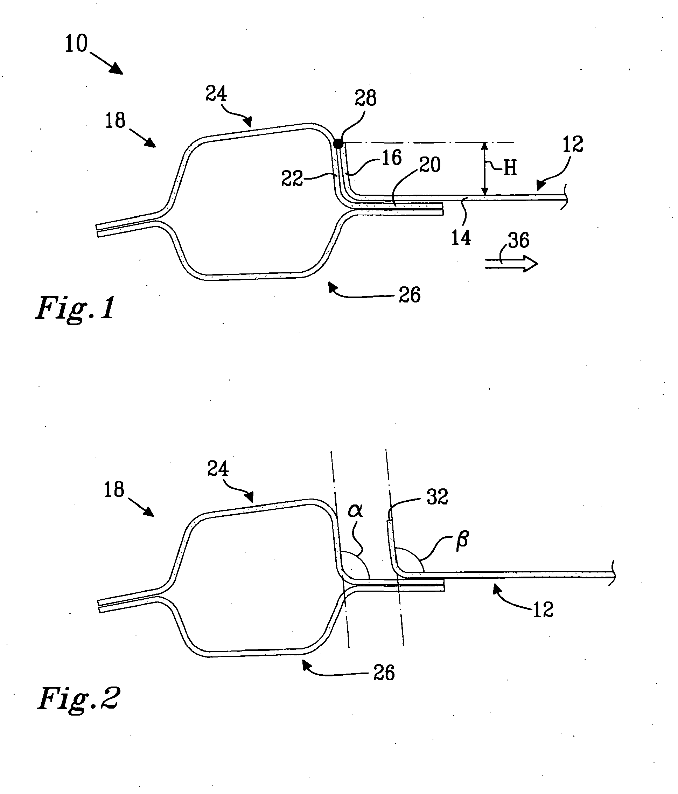

Fig. 1 illustrates a cross-sectional view of an embodiment of part of a vehicle body structure 10, having a longitudinal centre, according to the present invention. As illustrated in Fig. 1, the vehicle body structure 10 comprises a roof panel 12 having a longitudinal centre line, which roof panel 12 comprises a base portion 14 extending from both sides of the longitudinal centre line. The roof panel 12 further comprises a flanged portion 16. The vehicle body structure 10 further comprises a body member 18 comprising a first and a second abutment surface 20, 22. In the embodiment illustrated in Fig. 1, the body member 18 is a roof side rail and comprises a first and a second body panel 24, 26, each panel 24, 26 being bent and the two panels 24, 26 are attached to one another by conventional attachment means, such as: spot-welding, leaser welding or arc welding (not shown). It should however be realized that the body member 18 can be constituted in a plurality of different ways, as long as it provides the aforementioned abutment surfaces 20, 22. For example, if suitable for the material of the body member 18, the body member 18 may be a unitary component, possibly manufactured by extrusion. Furthermore, in the embodiment illustrated in Fig. 1 the first body panel 24 provides both the abutment surfaces 20, 22, but in some implementations of the body member 18, at least one of the abutment surfaces 20, 22 may be provided by the second body panel 26 or an additional member (not shown) of the body member 18.

As illustrated in Fig. 1, the abutment surfaces 20, 22 are mutually inclined and the first abutment surface 20 projects in a direction towards the longitudinal centre of the vehicle body structure 10. Furthermore, at least a portion of the base portion 14 of the roof panel 12 is in a substantially parallel overlapping contacting relationship to the first abutment surface 20. As may be gleaned from Fig. 1, and in accordance with the present invention, at least a portion of the flanged portion 16 abuts the second abutment surface 22, and the roof panel 12 is attached to the body member 18 by means of a joint 28 along at least a portion of the second surface 22.

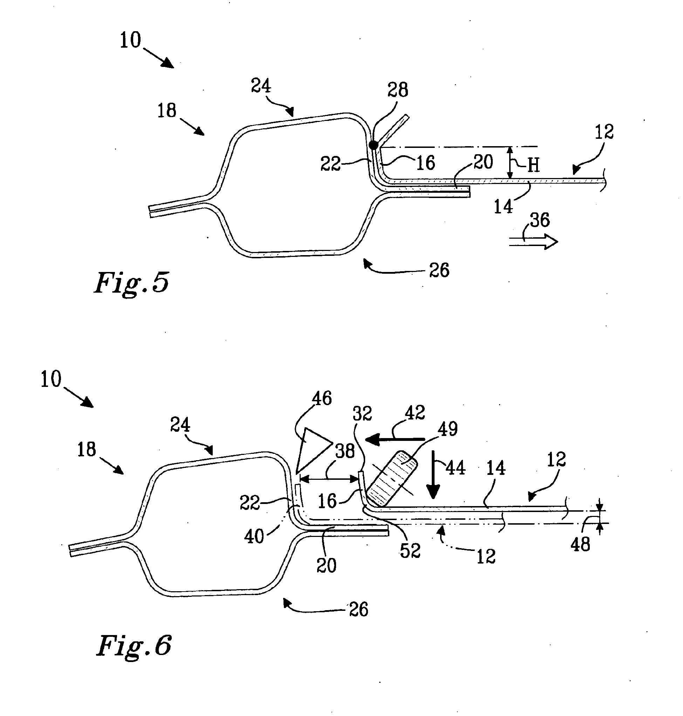

The flanged portion 16 can abut the second abutment surface 22 in different ways. For example, as illustrated in Fig 5, only a portion of the flanged portion 16 may abut the second abutment surface 22. However, as illustrated in Fig. 1, and according to the invention, the flanged portion 16 is in a substantially parallel overlapping contacting relationship to the second surface 22.

Defined in Fig. 2 is a relative body member inclination angle α between the mutually inclined first and second abutment surfaces 20, 22. According to a preferred embodiment of the invention, the relative body member inclination angle α is in a range of 45-135°, preferably in a range of 60 - 120 °, most preferably in a range of 80 - 100 °. Furthermore, a relative roof inclination angle β, as defined in Fig. 2, between the flanged portion 16 and the base portion 14 is substantially equal to the relative body inclination angle α.

As further illustrated in Fig. 2, the flanged portion 16 comprises a distal edge portion 32. Preferably, the roof panel 12 is attached to the body member 18 along at least a portion of the distal edge portion 32.

As indicated by the joint 28 in Fig. 1, a preferred means of attaching the roof member 12 to the body member 18 is by means of a brazed joint 28.

In a preferred embodiment of the invention, a smallest distance (H) from the joint 28 to the portion of the base portion 14 in contacting relationship to the first abutment surface 20, as indicated in Fig. 1 as well as Fig. 5, is at least 2 mm, preferably at least 4 mm.

Fig. 1 further illustrates a preferred implementation of the first abutment surface 20, wherein the base portion 14 extends in a transverse direction 36 being substantially parallel to the extension of the first abutment surface 20 from the second abutment surface 22. In the preferred implementation of the first abutment surface 20, the base portion 14 overlaps the first abutment surface 20 for a distance of at least 0.1 %, preferably at least 0.3 % of the transversal extension of the base portion 14.

In a preferred implementation of the roof panel 12, the roof panel 12 is constituted by a steel plate or an aluminium plate.

Assembling of the vehicle body structure 10 with the roof panel 12 may be performed in accordance with a method schematically illustrated in Fig. 6. As may be gleaned from Fig. 6, when the roof panel 12 is placed on a body member 18 of a vehicle body structure 10 prior to the attachment of the roof panel 12, there may be an initial discrepancy 38 between the actual and the desired attachment location of the roof panel 12, the desired attachment location of the roof panel being indicated by a dotted line 40. This initial discrepancy may be due to manufacturing tolerances of the vehicle body structure 10. As further illustrated in Fig. 6, the roof panel 12 comprises a base portion 14 and a flanged portion 16 and the body member 18 comprises a first and second abutment surface 20, 22 which are abutment surfaces 20, 22 being mutually inclined. The attachment method ensures that at least a portion of the base portion 14 is in a substantially parallel overlapping contacting relationship to the first abutment surface 20. The method according to the present invention comprises the steps of:
- applying a pressure to at least a portion of the roof panel 12 in a first direction 42 towards at least the second abutment surface 22, and
- attaching the flanged portion 16 to the body member 18 along at least a portion of the second abutment surface 22.

As may be gleaned from Fig. 6, a preferred application of the assembling method described above is for a vehicle body structure 10 in which the first abutment surface 20 projects in a direction towards the longitudinal centre of the vehicle body structure 10. Fig. 6 further illustrates a preferred implementation of the base portion 14 to be used in the aforementioned assembling method, in which the base portion 14 extends from the longitudinal centre line of the roof panel 12.

As may be appreciated when studying Fig. 6, when a pressure is applied in the first direction 42, the flanged portion 16 will move towards the second abutment surface 22 and will hence reach the desired attachment location, indicated by the dotted line 40. At the aforesaid desired attachment location, the roof panel 12 and the body member 18 are aligned and the assembly is now in a condition suitable for applying an attachment means 46.

As further illustrated in Fig. 6, there may be an initial vertical discrepancy 48 between the base portion 14 of the roof panel 12 and the body member 18, e.g. the first abutment surface 20. As such, the method of the invention further comprises a step of applying a pressure to at least a portion of the roof panel 12 in a second direction 44 towards at least the first abutment surface 20. In the Fig. 6 embodiment of the method of the invention, a pressure is applied to the roof panel 12 by a tool 49 in a pressure direction, which pressure direction comprises components in both the first and second directions 42, 44. However, in some embodiments of the method of the invention, it may be preferred to use two separate pressure tools (not shown), one for applying a pressure in the first direction 42 and another for applying a pressure in the second direction 44.

As may be gleaned from Fig. 6, a transition from the base portion 14 to the flanged portion 16 occurs in an intermediate portion 52. Furthermore, the method of the invention comprises a step of applying the pressure to at least a portion of the intermediate portion 52. However, due to e.g. space limitations, it may in some embodiments of the inventive method be preferred to apply a pressure on the flanged portion 16 and/or the base portion 14.

As further indicated in Fig. 6, the pressure is applied by means of a pressure roll even though a plurality of other tools can be utilized, such as pressure beams, or pads (not shown). Furthermore, the flanged portion 16 of the roof panel 12 comprises a distal edge 32 and the corresponding inventive method comprises a step of attaching the roof panel 12 to the body member 18 along at least a portion of the distal edge 32. Furthermore, the attachment means 46 is preferably a brazing attachment means, more preferably a laser brazing attachment means.

Further modifications of the invention within the scope are feasible. For instance, the flanged portion 16 of the roof panel 12 can be attached to the body member 18 in selected places only along at least a portion of the second surface 22, similar to a spot-weld attachment.

## Claims

1. A vehicle body structure (10) having a longitudinal centre, said vehicle body structure (10) comprising a roof panel (12) having a longitudinal centre line, said roof panel (12) comprising a base portion (14) extending from both sides of said longitudinal centre line, said roof panel (12) further comprising a flanged portion (16) wherein a transition from said base portion (14) to said flanged portion (16) occurs in an intermediate portion (52), said vehicle body structure (10) further comprising a body member (18) comprising a first and a second abutment surface (20, 22), said abutment surfaces (20, 22) being mutually inclined; wherein said first abutment surface (20) projects in a direction towards said longitudinal centre of said vehicle body structure (10); wherein at least a portion of said base portion (14) is in a substantially parallel overlapping contacting relationship to said first abutment surface (20) **characterized in that** said flanged portion (16) is in a substantially parallel overlapping contacting relationship to said second surface (22), wherein said flanged portion comprises a distal edge portion (32) and said roof panel (12) is attached to said body member (18) by means of a joint (28) along at least a portion of said distal edge portion (32) and at least a portion of said second surface (22).

2. The vehicle body structure (10) according to claim 1, wherein a relative body member inclination angle (α) between said mutually inclined first and second abutment surfaces (20, 22) is in a range of 45 - 135 °, preferably in a range of 60 - 120 °, most preferably in a range of 80-100 °.

3. The vehicle body structure (10) according to any of the preceding claims,
**wherein** a relative roof inclination angle (β) between said flanged portion (16) and said base portion (14) is substantially equal to the relative body inclination angle (α).

4. The vehicle body structure (10) according to any of the preceding claims,
wherein said roof panel (12) is attached to said body member (18) by means of a brazed joint (28).

5. The vehicle body structure (10) according to any of the preceding claims,
wherein a smallest distance (H) from said joint (28) to said portion of said base portion (14) in said contacting relationship to said first abutment surface (20) is at least 2 mm, preferably at least 4 mm.

6. The vehicle body structure (10) according to any of the preceding claims,
wherein said base portion (14) extends in a transverse direction (36) being substantially parallel to the extension of said first abutment surface (20) from said second abutment surface (22) and said base portion (14) overlaps said first abutment surface (20) for a distance of at least 0.1 %, preferably at least 0.3 % of the transversal extension of said base portion (14).

7. The vehicle body structure (10) according to any of the preceding claims,
wherein said body member (18) is a roof side rail.

8. The vehicle body structure (10) according to any of the preceding claims,
wherein said roof panel (12) is constituted by a steel plate or an aluminium plate.

9. A vehicle, comprising a vehicle body structure (10) according to any one of the preceding claims.

10. A method of attaching a roof panel (12) of a vehicle body structure (10) to a body member (18), said roof panel (12) comprises a base portion (14) and a flanged portion (16), said body member (18) comprises a first and second abutment surface (20, 22), said abutment surfaces (20, 22) being mutually inclined, said method being used in order to ensure that at least a portion of said base portion (14) is in a substantially parallel overlapping contacting relationship to said first abutment surface (20) and said method comprising the steps of:
- applying a pressure to at least a portion of said roof panel (12) in a first direction (42) towards at least said second abutment surface (22);
- attaching the flanged portion (16) to the body member (18) along at least a portion of the second abutment surface (22), and
- applying a pressure to at least a portion of said roof panel (12) in a second direction (44) towards at least said first abutment surface (20).
wherein a transition from said base portion (14) to said flanged portion (16) occurs in an intermediate portion (52), said method further comprising a step of:
- applying said pressure to at least a portion of said intermediate portion (52) and wherein the flanged portion (16) of the roof panel (12) comprises a distal edge (32), said method further comprising a step of:
- attaching the roof panel (12) to the body member (18) along at least a portion of said distal edge (32).

11. The method according to claim 10 further comprising a step of:
- applying said pressure by means of a pressure roll (49).

12. The method according to any one of claims 10-11, further comprising a step of:
- attaching said roof panel (12) to said body member (18) by means of brazing.

13. The method according to claim 12, further comprising a step of:
- attaching said roof panel (12) to said body member (18) by means of laser brazing.

## Patentansprüche

1. Fahrzeugkarosseriestruktur (10) mit einem Längsmittelpunkt, wobei die Fahrzeugkarosseriestruktur (10) ein Dachpaneel (12) mit einer Längsmittellinie umfasst, wobei das Dachpaneel (12) einen Grundbereich (14) umfasst, der sich von beiden Seiten der Längsmittellinie weg erstreckt, und das Dachpaneel (12) weiter einen Bereich (16) mit Flansch umfasst, wobei in einem dazwischen liegenden Bereich (52) ein Übergang von dem Grundbereich (14) zu dem Bereich (16) mit Flansch erfolgt; wobei die Fahrzeugkarosseriestruktur (10) weiter ein Karosseriebauteil (18) mit einer ersten und einer zweiten Anlage-Oberfläche (20, 22) umfasst und die Anlage-Oberflächen (20, 22) gegeneinander geneigt sind; wobei die erste Anlage-Oberfläche (20) in eine Richtung zum Längsmittelpunkt der Fahrzeugkarosseriestruktur (10) hin vorspringt; und wobei wenigstens ein Teil des Grundbereichs (14) in einer im wesentlichen parallelen überlappenden Kontaktbeziehung zu der ersten Anlage-Oberfläche (20) steht, **dadurch gekennzeichnet, dass**
der Bereich (16) mit Flansch in einer im wesentlichen parallelen überlappenden Kontaktbeziehung zu der zweiten Oberfläche (22) steht, wobei der Bereich mit Flansch einen äußeren Randabschnitt (32) umfasst und das Dachpaneel (12) mittels einer Verbindungsstruktur (28) wenigstens entlang eines Teils des äußeren Randabschnitts (32) und wenigstens eines Teils der zweiten Oberfläche (22) an dem Karosseriebauteil (18) befestigt ist.

2. Fahrzeugkarosseriestruktur (10) nach Anspruch 1, **dadurch gekennzeichnet, dass** ein relativer Karosseriekörper-Neigungswinkel (α) zwischen den zueinander geneigten ersten und zweiten Anlage-Oberflächen (20, 22) in einem Bereich von 45° bis 135°, vorzugsweise in einem Bereich von 60° bis 120° und am vorteilhaftesten in einem Bereich von 80° bis 100° liegt.

3. Fahrzeugkarosseriestruktur (10) nach einem der vorhergehenden Ansprüche, **dadurch gekennzeichnet, dass** ein relativer Dach-Neigungswinkel (β) zwischen dem Bereich (16) mit Flansch und dem Grundbereich (14) im wesentlichen gleich dem relativen Körper-Neigungswinkel (α) ist.

4. Fahrzeugkarosseriestruktur (10) nach einem der vorhergehenden Ansprüche, **dadurch gekennzeichnet, dass** das Dachpaneel (12) mittels einer Hartlötverbindung (28) an dem Karosseriebauteil (18) befestigt ist.

5. Fahrzeugkarosseriestruktur (10) nach einem der vorhergehenden Ansprüche, **dadurch gekennzeichnet, dass** ein kleinster Abstand (H) von der Verbindung (28) zu dem Abschnitt des Grundbereichs (14), der in der erwähnten Kontaktbeziehung mit der ersten Anlage-Oberfläche (20) steht, wenigstens 2 mm, vorzugsweise wenigstens 4 mm, beträgt.

6. Fahrzeugkarosseriestruktur (10) nach einem der vorhergehenden Ansprüche, **dadurch gekennzeichnet, dass** sich der Grundbereich (14) in einer Querrichtung (36) erstreckt, die im wesentlichen parallel zu der Erstreckung der ersten Anlage-Oberfläche (20) von der zweiten Anlage-Oberfläche (22) ist, und dass der Grundbereich (14) die erste Anlage-Oberfläche (20) auf einer Länge von wenigstens 0,1%, vorzugsweise wenigstens 0,3% der Quer-Erstreckung des Grundbereichs (14) überlappt.

7. Fahrzeugkarosseriestruktur (10) nach einem der vorhergehenden Ansprüche, **dadurch gekennzeichnet, dass** das Karoseriebauteil (18) eine Dach-Seitenschiene ist.

8. Fahrzeugkarosseriestruktur (10) nach einem der vorhergehenden Ansprüche, **dadurch gekennzeichnet, dass** das Dachpaneel (12) aus einer Stahlplatte oder einer Aluminiumplatte gebildet ist.

9. Fahrzeug, umfassend eine Fahrzeugkarosseriestruktur (10) nach einem der vorhergehenden Ansprüche.

10. Verfahren zum Befestigen eines Dachpaneels (12) einer Fahrzeugkarosseriestruktur (10) an einem Karosseriebauteil (18), wobei das Dachpaneel (12) einen Grundbereich (14) und einen Bereich (16) mit Flansch umfasst, das Karosseriebauteil (18) eine erste und eine zweite Anlage-Oberfläche (20, 22) umfasst, wobei die Anlage-Oberflächen (20, 22) zueinander geneigt sind, wobei das Verfahren verwendet wird, um sicherzustellen, dass wenigstens ein Teil des Grundbereichs (14) sich in einer im wesentlichen parallelen überlappenden Kontaktbeziehung mit der ersten Anlage-Oberfläche (20) befindet, und wobei das Verfahren folgende Schritte umfasst:
- Aufbringen eines Drucks auf wenigstens einen Abschnitt des Dachpaneels (12) in einer ersten Richtung (42) auf wenigstens die zweite Anlage-Oberfläche (22) hin,
- Befestigen des Bereichs (16) mit Flansch an dem Karosseriebauteil (18) entlang wenigstens eines Teils der zweiten Anlage-Oberfläche (22) und
- Aufbringen eines Drucks auf wenigstens einen Abschnitt des Dachpaneels (12) in einer zweiten Richtung (44) auf wenigstens die erste Anlage-Oberfläche (20) hin;
wobei in einem dazwischen liegenden Bereich (52) ein Übergang von dem Grundbereich (14) zu dem Bereich (16) mit Flansch erfolgt und das Verfahren weiter folgenden Schritt umfasst:
- Aufbringen des Drucks auf wenigstens einen Teil des dazwischen liegenden Bereiches (52)
und wobei der Bereich (16) mit Flansch des Dachpaneels (12) einen äußeren Randabschnitt (32) umfasst, wobei das Verfahren weiter folgenden Schritt umfasst:
- Befestigen des Dachpaneels (12) an dem Karosseriebauteil (18) entlang wenigstens einem Teil des äußeren Randabschnitts (32).

11. Verfahren nach Anspruch 10, **dadurch gekennzeichnet, dass** es weiter den Schritt umfasst:
- Aufbringen des Drucks mittels einer Druckrolle (49).

12. Verfahren nach einem der Ansprüche 10 bis 11, **dadurch gekennzeichnet, dass** es weiter den Schritt umfasst:
- Befestigen des Dachpaneels (12) an dem Karosseriebauteil (18) durch Hartlöten.

13. Verfahren nach Anspruch 12, **dadurch gekennzeichnet, dass** es weiter den Schritt umfasst:
- Befestigen des Dachpaneels (12) an dem Karosseriebauteil (18) durch Laser-Hartlöten.

## Revendications

1. Structure (10) de carrosserie de véhicule ayant un centre longitudinal, ladite structure (10) de carrosserie de véhicule comprenant un panneau (12) de toit ayant un axe longitudinal, ledit panneau (12) de toit comprenant une portion (14) de base s'étendant des deux côtés dudit axe longitudinal, ledit panneau (12) de toit comprenant en outre une portion à bride (16) dans laquelle une transition de ladite portion de base (14) à ladite portion à bride (16) se produit dans une portion intermédiaire (52), ladite structure (10) de carrosserie de véhicule comprenant en plus un élément (18) de carrosserie comprenant une première et une deuxième surfaces d'aboutement (20, 22), lesdites surfaces d'aboutement (20, 22) étant inclinées l'une par rapport à l'autre ; ladite première surface d'aboutement (20) faisant saillie en direction dudit axe longitudinal de ladite structure (10) de carrosserie de véhicule ; au moins une partie de ladite portion de base (14) étant dans une relation de contact par chevauchement sensiblement parallèle avec ladite première surface d'aboutement (20), ***caractérisée en ce que*** ladite portion à bride (16) est dans une relation de contact par chevauchement sensiblement parallèle avec ladite deuxième surface d'aboutement (22), ladite portion à bride comprenant une portion distale de chant (32) et ledit panneau (12) de toit étant fixé audit élément (18) de carrosserie au moyen d'un joint (28) le long d'au moins une partie de ladite portion distale de chant (32) et d'au moins une partie de ladite deuxième surface (22).

2. Structure (10) de carrosserie de véhicule selon la revendication 1, dans laquelle un angle (α) relatif d'inclinaison de l'élément de carrosserie entre lesdites première et deuxième surfaces d'aboutement (20, 22) inclinées l'une par rapport à l'autre est compris dans une plage de 45 à 135°, de manière préférée dans une plage de 60 à 120°, et de manière davantage préférée dans une plage de 80 à 100°.

3. Structure (10) de carrosserie de véhicule selon l'une quelconque des revendications précédentes, dans laquelle un angle (ß) relatif d'inclinaison du toit entre ladite portion à bride (16) et ladite portion de base (14) est sensiblement égal à l'angle (α) relatif d'inclinaison de l'élément de carrosserie.

4. Structure (10) de carrosserie de véhicule selon l'une quelconque des revendications précédentes, dans laquelle ledit panneau (12) de toit est fixé audit élément (18) de carrosserie au moyen d'un joint brasé (28).

5. Structure (10) de carrosserie de véhicule selon l'une quelconque des revendications précédentes, dans laquelle une plus petite distance (H) entre ledit joint (28) et ladite partie de ladite portion de base (14) dans ladite relation de contact avec ladite première surface d'aboutement (20) est d'au moins 2 mm, et de manière préférée d'au moins 4 mm.

6. Structure (10) de carrosserie de véhicule selon l'une quelconque des revendications précédentes, dans laquelle ladite portion de base (14) s'étend dans une direction transversale (36) qui est sensiblement parallèle au prolongement de ladite première surface d'aboutement (20) à partir de ladite deuxième surface d'aboutement (22) et ladite portion de base (14) chevauche ladite première surface d'aboutement (20) sur une distance d'au moins 0,1 %, de manière préférée d'au moins 0,3 %, du prolongement transversal de ladite portion de base (14).

7. Structure (10) de carrosserie de véhicule selon l'une quelconque des revendications précédentes, dans laquelle ledit élément (18) de carrosserie est un rail latéral de toit.

8. Structure (10) de carrosserie de véhicule selon l'une quelconque des revendications précédentes, dans laquelle ledit panneau (12) de toit est fait d'une plaque d'acier ou d'une plaque d'aluminium.

9. Véhicule comprenant une structure (10) de carrosserie de véhicule selon l'une quelconque des revendications précédentes.

10. Procédé de fixation d'un panneau (12) de toit d'une structure (10) de carrosserie de véhicule à un élément (18) de carrosserie, ledit panneau (12) de toit comprenant une portion de base (14) et une portion à bride (16), ledit élément (18) de carrosserie comprenant une première et une deuxième surfaces d'aboutement (20, 22), lesdites surfaces d'aboutement (20, 22) étant inclinées l'une par rapport à l'autre, ledit procédé étant utilisé pour garantir qu'au moins une partie de ladite portion de base (14) est dans une relation de contact par chevauchement sensiblement parallèle avec ladite première surface d'aboutement (20), et ledit procédé comprenant les étapes consistant à :
- appliquer une pression sur au moins une partie dudit panneau (12) de toit dans une première direction (42) dirigée vers au moins ladite deuxième surface d'aboutement (22) ;
- fixer la portion à bride (16) à l'élément (18) de carrosserie le long d'au moins une partie de la deuxième surface d'aboutement (22), et
- appliquer une pression sur au moins une partie dudit panneau (12) de toit dans une deuxième direction (44) dirigée vers au moins ladite première surface d'aboutement (20), dans lequel une transition de ladite portion de base (14) à ladite portion à bride (16) se produit dans une portion intermédiaire (52), ledit procédé comprenant de plus une étape consistant à :
- appliquer ladite pression sur au moins une partie de ladite portion intermédiaire (52) et dans lequel la portion à bride (16) du panneau (12) de toit comprend un chant distal (32), ledit procédé comprenant de plus une étape consistant à :
- fixer le panneau (12) de toit à l'élément (18) de carrosserie le long d'au moins une partie dudit chant distal (32).

11. Procédé selon la revendication 10, comprenant de plus une étape consistant à :
- appliquer ladite pression au moyen d'un cylindre presseur (49).

12. Procédé selon l'une quelconque des revendications 10 et 11, comprenant de plus une étape consistant à :
- fixer ledit panneau (12) de toit audit élément (18) de carrosserie par brasage.

13. Procédé selon la revendication 12, comprenant de plus une étape consistant à :
- fixer ledit panneau (12) de toit audit élément (18) de carrosserie par brasage laser.
